# EUROPÄISCHE PATENTSCHRIFT

(11) **EP 4 098 149 B1**
(45) Veröffentlichungstag und Bekanntmachung des Hinweises auf die Patenterteilung: **20.05.2026**
(21) Anmeldenummer: 21177008.6
(22) Anmeldetag: 01.06.2021
(51) Int. Cl.: A47B 88/457, F25D 25/02

(54) **ANTRIEBSADAPTER ZUR WERKZEUGLOSEN MONTAGE EINES ANTRIEBSELEMENTS AN EINEM SCHIENENELEMENT EINES FÜHRUNGSSYSTEMS**
DRIVE ADAPTER FOR MOUNTING A DRIVE ELEMENT ON A RAIL ELEMENT OF A GUIDE SYSTEM WITHOUT TOOLS
ADAPTATEUR D'ENTRAÎNEMENT DESTINÉ AU MONTAGE SANS OUTIL D'UN ÉLÉMENT D'ENTRAÎNEMENT SUR UN ÉLÉMENT DE RAIL D'UN SYSTÈME DE GUIDAGE

(43) Veröffentlichungstag der Anmeldung: 07.12.2022
(73) Patentinhaber: Accuride International GmbH, 65582 Diez/Lahn (DE)
(72) Erfinder: Satony, Christian, 56598 Rheinbrohl (DE); Neuhaus, Christoph, 56421 Niederelbert (DE)
(74) Vertreter: WSL Patentanwälte Partnerschaft mbB

(56) Entgegenhaltungen:
- WO-A1-2009/119921
- CN-B- 106 225 411

## Beschreibung

Die vorliegende Erfindung betrifft einen Antriebsadapter zur werkzeuglosen Montage eines Antriebselements an einem Schienenelement eines Führungssystems.

Darüber hinaus betrifft die vorliegende Erfindung ein System aus einem Führungssystem mit mindestens zwei Schienenelementen, einem Antriebselement und einem solchen Antriebsadapter.

Führungssysteme, insbesondere lineare Führungssysteme, beispielsweise Teleskopschienen, mit mindestens zwei Schienenelementen und gegebenenfalls einem Wälzkörperkäfig mit darin aufgenommenen Wälzkörpern zum Reduzieren der Reibung zwischen den Schienenelementen sind in mannigfaltigen Ausführungsformen aus dem Stand der Technik bekannt. Sie werden in verschiedenen Haushaltsgeräten, aber auch im Automobilbau und in vielen weiteren Anwendungen eingesetzt. In einer Vielzahl von Anwendungsbereichen kommen bereits Führungssysteme zum Einsatz, die motorisch angetrieben sind.

Die Anwendungsgebiete für Führungssysteme sind häufig preissensitiv. Führungssysteme mit einem motorischen Antrieb sind jedoch in ihrer Konstruktion komplex und erfordern eine aufwendige Montage beim Zusammenbau der Systeme.

Aus der CN 106 225 411 B ist ein elektrisches Gleitschienensystem für eine Großraumkühlschublade bekannt. Eine antreibende und eine angetriebene Gleitschienenbaugruppe sind symmetrisch an den beiden Seiten der Kühlschrankschublade angebracht und mit der Seitenwand eines Kühlschrankinnenbehälters verbunden. Jede Gleitschienenbaugruppe umfasst eine feste Führungsschiene, eine Verbindungsführungsschiene und eine Gleitführungsschiene. Die antreibende Gleitschienenbaugruppe treibt die angetriebene Gleitschienenbaugruppe an.

Demgegenüber liegt der vorliegenden Erfindung die Aufgabe zugrunde, ein Antriebselement mit möglichst wenigen Arbeitsschritten in ein System aus dem Antriebselement und einem Führungssystem integrierbar zu machen.

Diese Aufgabe wird mit einem Antriebsadapter zur werkzeuglosen Montage eines Antriebselements an einem Schienenelement eines Führungssystems gemäß dem unabhängigen Anspruch 1 der vorliegenden Anmeldung gelöst.

Dazu weist der Antriebsadapter zur werkzeuglosen Montage eines Antriebselements an einem Schienenelement eines Führungssystems einen Antriebsträger und einen Halteabschnitt auf, wobei der Antriebsträger eine Montageeinrichtung für das Antriebselement umfasst, wobei der Halteabschnitt zwei Stützflächen und einen die Stützflächen zumindest abschnittsweise verbindenden und einen Abstand zwischen den Stützflächen definierenden Halterücken aufweist, wobei die zwei Stützflächen jeweils konvex gekrümmt sind, voneinander wegzeigen und derart ausgestaltet sind, dass sie zwischen zwei zueinander hinzeigenden Wälzkörperlaufflächen des Schienenelements einklemmbar sind.

Der erfindungsgemäße Antriebsadapter weist zwei wesentliche Elemente auf, nämlich einen Antriebsträger und einen Halteabschnitt auf. Der Antriebsträger ist so ausgestaltet, dass er eine Montageeinrichtung für das Antriebselement umfasst. Der Halteabschnitt hingegen dient dazu, den Antriebsadapter werkzeuglos mit einem Schienenelement eines Führungssystems zu verbinden bzw. den Antriebsadapter an diesem Schienenelement zu montieren.

Der erfindungsgemäße Antriebsadapter macht sich dazu das Konstruktionsprinzip der Schienenelemente eines Führungssystems zunutze. Ein solches Schienenelement weist in einer Ausführungsform einen, vorzugsweise ebenen, Schienenrücken auf, von dem zwei Schenkel abgehen, die sich im Wesentlichen parallel zueinander und in die gleiche Richtung ausgehend von dem Schienenrücken erstrecken. Diese Schenkel der Schienenelemente tragen jeweils eine Wälzkörperlauffläche für einen oder eine Mehrzahl von Wälzkörpern, die sich im montierten Zustand eines Führungssystems zwischen zwei Schienenelementen befinden und die Reibung der Schienenelemente während der Auszugsbewegung reduzieren. Aufgrund dieser Konstruktion der Schienenelemente weisen die Wälzkörperlaufflächen zweier gegeneinander verschieblicher Schienenelemente zueinander hin, sodass ein einziger Wälzkörper zwischen den beiden Schienenelementen sowohl mit der Wälzkörperlauffläche des einen Schienenelements als auch mit der Wälzkörperlauffläche des anderen Schienenelements in Eingriff ist.

Der Halteabschnitt des Antriebsadapters ist komplementär zu dem Schienenelement ausgestattet. Der Halteabschnitt weist zwei Stützflächen analog zu den Schenkeln des Schienenelements auf. Die Stützflächen wiederum werden von einem Halterücken in einem definierten Abstand voneinander gehalten. Der Halterücken verbindet die beiden Stützflächen zumindest abschnittsweise miteinander. Die Stützflächen kommen in einer Ausführungsform bei der Montage an dem Schienenelement in Kontakt mit den Schenkel des Schienenelements.

Wie einleitend dargestellt, gibt es jeweils ein Schienenelement mit zwei zueinander hinzeigenden Wälzkörperlaufflächen auf den Schenkeln dieses Schienenelements und ein Schienenelement mit voneinander wegzeigenden Wälzkörperlaufflächen auf den Schenkeln dieses zweiten Schienenelements. Dabei bezeichnet man das Schienenelement mit voneinander wegzeigenden Laufflächen als Innenschiene und das Schienenelement mit zueinander hinzeigenden Laufflächen als Außenschiene. Der erfindungsgemäße Antriebsadapter kann in die Außenschiene eingeschoben werden.

Der Formschluss zwischen den Stützflächen des Halteabschnitts des Antriebsadapters und den die Wälzkörperlaufflächen tragenden Schenkeln des Schienenelements bewirkt eine Fixierung des Antriebsadapters in der Hochrichtung des Schienenelements, d. h. im Wesentlichen in einer Richtung parallel zum Schienenrücken und senkrecht zur Auszugsrichtung. Es hat sich herausgestellt, dass die gleichzeitig zwischen den Schenkeln des Schienenelements und den Stützflächen des Halteabschnitts des Antriebsadapters wirkenden Reibkräfte in bestimmten Antriebssituationen nicht ausreichen, um den Antriebsadapter auch in oder entgegen der Auszugsrichtung an dem Schienenelement hinreichend zu sichern. Daher weist der Halteabschnitt in einer Ausführungsform der Erfindung zumindest eine Rastnase oder eine Rastvertiefung zum Verrasten mit einem dazu komplementären Element an dem Schienenelement auf.

Es hat sich gezeigt, dass eine solche Rastnase oder Rastvertiefung vorzugsweise an dem Halterücken des Halteabschnitts vorgesehen ist, sodass die Rastnase oder die Rastvertiefung mit einem dazu komplementären Element, welches an dem Schienenrücken des Schienenelements angeordnet ist, in Eingriff kommt.

In einer Ausführungsform der Erfindung besteht der Antriebsadapter ein- oder mehrstückig aus Kunststoff. Solche Kunststoffbauteile lassen sich in großen Stückzahlen mit der erforderlichen Maßhaltigkeit durch Spritzgießen fertigen.

Es bietet sich an, den Halterücken auch als Träger für weitere Elemente des Antriebs zu verwenden. Daher trägt in einer Ausführungsform der Erfindung der Halterücken zumindest einen Lagerbock. Dieser Lagerbock dient in dem System zum Aufnehmen eines Lagers einer Welle, beispielsweise eines Rillenwälzkörperlagers, oder der Lagerbock bildet selbst einen Teil eines Gleitlagers einer Welle.

Eine mögliche Form eines Antriebs für eine Teleskopschiene umfasst einen Spindelantrieb mit einer sich in der Auszugsrichtung erstreckenden Welle in Form einer Spindel. Die Welle muss dabei ebenfalls an dem Schienenelement, mit dem das Antriebselement verbunden ist geführt werden.

Es hat sich herausgestellt, dass eine Schlupfkupplung zwischen einer Antriebswelle und einer Abtriebswelle des Antriebs für ein Führungssystem wirksam eine Beschädigung der beteiligten Elemente in einer Überlastsituation verhindert. In einer Ausführungsform ist die Schlupfkupplung eine Magnetkupplung. Eine Schlupfkupplung in Form einer Magnetkupplung ermöglicht zudem eine einfachere Montage der einzelnen Elemente an dem Schienenelement.

Daher weist in einer Ausführungsform der Erfindung der Halterücken zwei Lagerböcke zum Stützen einer Antriebswelle auf der einen Seite und zum Stützen einer Abtriebswelle, vorzugsweise in Form einer Gewindespindel, auf der anderen Seite auf.

Dabei sind die Lagerböcke in einer Ausführungsform so ausgestaltet, dass sie jeweils ein Lager, beispielsweise ein Rillenwälzlager, der Antriebswelle und der Abtriebswelle aufnehmen. In einer anderen Ausführungsform bilden die Lagerböcke selbst Teil eines Wälzlagers zum Lagern der Antriebswelle oder der Abtriebswelle.

In einer Ausführungsform ist zwischen den beiden Lagerböcken eine Durchbrechung in dem Halterücken zum Aufnehmen der Kupplung zwischen der Antriebswelle und der Abtriebswelle vorgesehen ist.

In einer Ausführungsform der Erfindung weist die Montageeinrichtung des Antriebsträgers zwei Klemmbacken mit zueinander hinzeigenden konkaven Klemmflächen zum kraftschlüssigen Klemmen einer konvexen Au ßenfläche des Antriebselements, insbesondere eines Antriebselements mit einem Elektromotor auf. Mit Hilfe der zwei Klemmbacken lässt sich das Antriebselement, vorzugsweise werkzeuglos, an dem Antriebsträger des Antriebsadapters befestigen.

In einer weiteren Ausführungsform der Erfindung weist die Montageeinrichtung des Antriebsträgers einen Montagerahmen mit zwei gegenüberliegenden Klemmflächen zur kraftschlüssigen Aufnahme des Antriebselements zwischen den beiden Klemmflächen auf. Auch in einem solchen Montagerahmen kann das Antriebselement, vorzugsweise ein Antriebselement mit einem Elektromotor, zwischen den beiden Klemmflächen werkzeuglos montiert werden.

Ein Antriebselement mit einem Elektromotor im Sinne der vorliegenden Anmeldung umfasst neben einem Elektromotor ohne zusätzliche funktionale Elemente auch Antriebsaggregate, die neben dem Elektromotor zumindest ein weiteres funktionales Element umfassen, beispielsweise ein Getriebe, eine Bremse oder einen Encoder.

In einer Ausführungsform der Erfindung ist dabei ein Abstand zwischen den zwei gegenüberliegenden Klemmflächen einstellbar veränderbar, sodass Antriebselemente, vorzugsweise Antriebselemente in Form von Elektromotoren oder Antriebselementen mit einem Elektromotor, mit voneinander verschiedener Länge in dem Montagerahmen aufnehmbar sind. Auf diese Weise kann ein einziger Typ von Antriebsadapter für eine Vielzahl von Bauformen von Antriebselementen, vorzugsweise von Elektromotoren, eingesetzt werden. Insbesondere dient eine solche Ausführungsform des Montagerahmens der Aufnahme von Antriebselementen mit unterschiedlichen Längen, vorzugsweise mit unterschiedlichen Längen in Auszugsrichtung. Dies erhöht die Anzahl von Gleichteilen auch für Schienenelemente unterschiedlicher Bauart und Dimensionierung.

In einer weiteren Ausführungsform der Erfindung ist zumindest eine der zwei Klemmflächen zumindest abschnittsweise in Richtung der anderen Klemmfläche federnd vorgespannt.

In einer weiteren Ausführungsform der Erfindung weist zumindest eine der zwei Klemmflächen zumindest eine Quetschraupe zum kraftschlüssigen Klemmen des Antriebselements auf.

In einer weiteren Ausführungsform erstrecken sich die zwei Klemmflächen des Montagerahmens im Wesentlichen senkrecht oder im Wesentlichen parallel zu dem Halterücken. Auf diese Weise wird eine Ausführungsform des Antriebsadapters bereitgestellt, die eine Montage eines Elektromotors mit einer sich parallel zum Halterücken erstreckenden Motorwelle (Klemmflächen zumindest abschnittsweise senkrecht zu dem Halterücken) ermöglicht. Alternativ wird eine Ausführungsform des Antriebsadapters bereitgestellt, die eine Montage eines Elektromotors mit einer sich senkrecht zum Halterücken erstreckenden Motorwelle (Klemmflächen im Wesentlichen parallel zu dem Halterücken) ermöglicht. Ein derart montierter Elektromotor eignet sich insbesondere zum Antreiben eines der folgenden Elemente, nämlich eines Riementriebs mit einem sich in der Auszugsrichtung erstreckenden Antriebsriemen, eines Zahnstangentriebs, eines Kettentriebs oder eines Antriebs mit einer flexiblen Welle.

In einer Ausführungsform der Erfindung umfasst die Montageeinrichtung des Antriebsträgers eine Wälzlageraufnahme zum Aufnehmen eines Wälzlagers als Teil eines eine Welle umfassenden Antriebselements. Dabei ist die Wälzlageraufnahme vorzugsweise derart angeordnet, dass darin ein Wälzlager für eine im Wesentlichen zu dem Halterücken senkrechte Welle aufnehmbar ist.

In einer Ausführungsform der Erfindung weist der Antriebsträger oder der Halteabschnitt einen Endanschlagträger zum, vorzugsweise werkzeuglosen, Aufnehmen eines Sensors zum Erfassen einer Anschlagsposition eines Schienenelements des Führungssystems auf.

Die zuvor genannte Aufgabe wird zudem auch durch ein System gemäß dem darauf in der vorliegenden Anmeldung gerichteten unabhängigen Anspruch gelöst. Ein solches System umfasst erfindungsgemäß ein Führungssystem mit mindestens einem ersten und einem zweiten Schienenelement, ein Antriebselement und einen Antriebsadapter, so wie es in den Ausführungsformen zuvor beschrieben wurde, wobei das erste Schienenelement zwei jeweils eine konkav gekrümmte Wälzkörperlauffläche tragende Schenkel und einen die Schenkel verbindenden Schienenrücken aufweist, wobei der Halteabschnitt in das erste Schienenelement eingeklemmt ist, sodass die konvex gekrümmten, voneinander wegzeigenden Stützflächen jeweils mit einer Wälzkörperlauffläche in Eingriff sind.

In einer Ausführungsform der Erfindung ist das Führungssystem ein lineares Führungssystem, bei welchem die Relativbewegung zwischen dem ersten und dem zweiten Schienenelement entlang einer Geraden erfolgt. In einer Ausführungsform der Erfindung ist das Führungssystem ausgewählt aus einer Gruppe bestehend aus einer Auszugsführung, einer Teleskopschiene und einer Linearführung. Dabei umfasst der Oberbegriff Führungssystem Gleitführungen, Kugelführungen und Rollenführungen. Wenn im Sinne der vorliegenden Anmeldung von einem Führungssystem die Rede ist, so ist dieser Begriff derart allgemein zu verstehen, dass nicht nur Schienen davon umfasst sind, bei welchen das erste Schienenelement und das zweite Schienenelement in etwa die gleiche Länge aufweisen, d.h. insbesondere Teleskopschienen, sondern auch Führungen, insbesondere Linearführungen, bei denen das zweite Schienenelement deutlich kürzer ist als das erste Schienenelement oder bei denen das zweite Schienenelement von einem Rollwagen gebildet ist.

In einer Ausführungsform ist das Führungssystem eine Teleskopschiene. Eine solche Teleskopschiene zeichnet sich dadurch aus, dass das erste und das zweite Schienenelement derart verschieblich aneinander gelagert sind, dass das zweite Schienenelement zumindest abschnittsweise aus dem ersten Schienenelement herausgezogen werden kann.

Wenn in der vorliegenden Anmeldung ausgeführt wird, dass das erfindungsgemäße Führungssystem ein erstes Schienenelement und ein zweites Schienenelement aufweist, so schließt dies nicht aus, dass das Führungssystem, insbesondere wenn es sich um eine Teleskopschiene handelt, weitere Schienenelemente, insbesondere drei Schienenelemente, beispielsweise zum Bereitstellen eines Vollauszugs, umfasst.

Im Sinne der vorliegenden Anmeldung wird unter der Auszugsrichtung die Richtung verstanden, in der das erste Schienenelement und das zweite Schienenelement relativ, vorzugsweise linear, gegeneinander bewegt werden können, um von einer Einzugsposition in eine Auszugsposition zu gelangen. Entsprechend ist eine Richtung entgegen der Auszugsrichtung diejenige Richtung, in welche die ersten und zweiten Schienenelemente relativ zueinander bewegt werden, um wieder in die Einzugsposition zu gelangen.

Bei einer Teleskopschiene bezeichnet die Einzugsposition diejenige Position des ersten und des zweiten Schienenelements relativ zueinander, in welcher die Teleskopschiene vollständig eingeschoben ist. Die Auszugsposition bezeichnet dann diejenige Position des erstens und des zweiten Schienenelements relativ zueinander, in welcher die Teleskopschiene maximal ausgezogen ist.

In einer Ausführungsform der Erfindung sind auf den zwei Wälzkörperlaufflächen des ersten Schienenelements und auf den zwei Wälzkörperlaufflächen des zweiten Schienenelements in einem Wälzkörperkäfig aufgenommene Wälzkörper angeordnet. Diese Wälzkörper rollen auf den jeweiligen Laufflächen ab und verringern eine Reibung zwischen dem ersten Schienenelement und dem zweiten Schienenelement. Unter einem Wälzkörper im Sinne der vorliegenden Anmeldung wird ein Rotationskörper verstanden, der als Element einer Führung die Reibung zwischen den verschiedenen Schienenelementen erheblich reduziert damit eine Relativbewegung zweier Schienenelemente zueinander erleichtert. Wälzkörper sind beispielsweise Kugeln, Rollen, Tonnen, Nadeln oder Kegel.

In einer Ausführung der vorliegenden Erfindung sind die Wälzkörper Kugeln. Es versteht sich, dass in diesem Fall der Wälzkörperkäfig ein Kugelkäfig ist.

In einer Ausführungsform der Erfindung ist zumindest das erste Schienenelement oder das zweite Schienenelement aus einem Material gefertigt, dass ausgewählt ist aus einer Gruppe bestehend aus Stahlblech, aluminiertem Stahlblech und Edelstahl.

In einer Ausführungsform der Erfindung ist entweder ein Abstand zwischen den voneinander wegzeigenden Stützflächen des Halteabschnitts vor dem Einbringen in das erste Schienenelement größer als ein Abstand zwischen den Wälzkörperlaufflächen des ersten Schienenelements. In diesem Fall weisen die Stützflächen des Halteabschnitts ein Übermaß gegenüber dem Abstand zwischen den Wälzkörperlaufflächen des ersten Schienenelements auf.

In einer Ausführungsform der Erfindung weist der Halterücken des Antriebsadapters eine Rastnase auf, die in einer Rastvertiefung in dem Schienenrücken des ersten Schienenelements eingerastet ist, oder der Schienenrücken des ersten Schienenelements weist eine Rastnase auf, die in einer Rastvertiefung in dem Halterücken des Antriebsadapters eingerastet ist.

In einer weiteren Ausführungsform der Erfindung ist das Antriebselement werkzeuglos und form- oder kraftschlüssig in dem Antriebsträger des Antriebsadapters aufgenommen.

In Ausführungsform der Erfindung ist das Antriebselement ausgewählt aus einer Gruppe bestehend aus einem Elektromotor und einem Wälzlager mit einer in dem Wälzlager aufgenommenen Antriebswelle.

Ein Elektromotor im Sinne der vorliegenden Erfindung ist ein Motor mit einer sich drehenden Motorwelle zum Bereitstellen eines Drehmoments. In einer Ausführungsform der Erfindung ist der Elektromotor ausgewählt aus einer Gruppe bestehend aus einem Schrittmotor, einem bürstenlosen Gleichstrommotor oder einem bürstenbehafteten Gleichstrommotor.

In einer Ausführungsform der Erfindung umfasst das System eine einer Kupplung, wobei die Kupplung eine Antriebswelle, insbesondere die Motorwelle eines Elektromotors und eine Abtriebswelle, beispielsweise eine Gewindespindel eines Spindeltriebs, derart miteinander verbindet, dass die Kupplung ein Drehmoment von der Antriebswelle auf die Abtriebswelle überträgt.

In einer Ausführungsform der Erfindung ist die Kupplung eine Magnetkupplung mit einem ersten Kupplungselement und einem zweiten Kupplungselement, wobei das erste Kupplungselement drehmomentfest mit der Antriebswelle verbunden ist und wobei das zweite Kupplungselement drehmomentfest mit der Abtriebswelle verbunden ist.

Einer solchen Ausführungsform liegt die Idee zugrunde, eine Magnetkupplung zur Drehmomentübertragung von der mit dem Elektromotor, insbesondere mit einer Motorwelle des Elektromotors, gekoppelten Antriebswelle auf die Abtriebswelle des Antriebs zu verwenden. Eine solche Magnetkupplung hat den Vorteil, dass die Kupplung selbst einen Überlastschutz bereitstellt. Eine magnetische Kraft zwischen dem ersten und dem zweiten Kupplungselement bewirkt eine Begrenzung der Drehmomentübertragung. Wird beispielsweise das angetriebene Schienenelement blockiert, so rutscht die Magnetkupplung durch. Das mit der Antriebswelle verbundene Kupplungselement dreht sich weiterhin, überträgt aber kein Drehmoment mehr auf das mit der Abtriebswelle verbundene Kupplungselement. Die Magnetkupplung bildet eine Rutschkupplung, die bei Übersteigen eines gewissen Gegendrehmoments der Abtriebswelle gegenüber dem von dem Elektromotor aufgebrachten Drehmoment der Antriebswelle durchrutscht. Auf diese Weise wird ein Überlastschutz für das angetriebene Führungssystem und ggf. ein Klemmschutz bereitgestellt.

Darüber hinaus ermöglicht die Magnetkupplung eine schnelle Montage in der Fertigung. Die Abtriebswelle des Antriebs kann mit dem entsprechenden zweiten Kupplungselement vorkonfektioniert werden ebenso wie die Antriebswelle oder ggf. der Motor zusammen mit der Antriebswelle mit dem ersten Kupplungselement. Bei der Montage wird in einer Ausführungsform der Motor angeflanscht und die beiden Wellen sind bei entsprechender Positionierung unmittelbar miteinander verbunden, sodass ein Drehmoment zwischen ihnen übertragbar ist.

In einer Ausführungsform sind die Lagerböcke des Antriebsadapters und/oder die darin jeweils aufgenommenen Lager derart ausgestaltet, dass sie axiale Kräfte, welche auf die Abtriebswelle oder die Antriebswelle wirken, aufnehmen. Die Aufnahme von axialen Kräften erfolgt in einer Ausführungsform dadurch, dass der Lagerbock als teilkreisförmige Lagerbuchse eines Wälzlagers einen axialen Anschlag für ein mit der jeweiligen Antriebs- und/oder Abtriebswelle verbundenen Anschlagselement bildet. In einer Ausführungsform der Erfindung ist dieses Anschlagselement das erste oder das zweite Kupplungselement. In einer weiteren Ausführungsform nehmen die Lagerböcke axiale Kräfte auf, indem sie jeweils ein Wälzkörperlager axial fixieren.

Eine Ausgestaltung in welcher die Lagerböcke axiale Kräfte aufnehmen hat eine Reihe von Vorteilen. Zum einen verhindern die derart ausgestalteten Lagerböcke, dass die axial wirkenden Kräfte in einen an die Antriebswelle gekoppelten Elektromotor eingetragen werden und diesen beschädigen.

Zum anderen ermöglichen es die derart ausgestalteten Lagerböcke das von einer Magnetkupplung übertragene Drehmoment zu definieren. Aufgrund der wirkenden Kräfte werden beim Ausfahren des Führungssystems in der Auszugsrichtung die ersten und zweiten Kupplungselemente der Magnetkupplung aufeinander gedrückt. Die Reibkraft zwischen den Kupplungselementen und damit das maximal zwischen den Kupplungselementen übertragene Drehmoment nehmen zu. Beim Einfahren des Führungssystems entgegen der Auszugsrichtung werden die ersten und zweiten Kupplungselemente der Magnetkupplung hingegen auseinander gezogen. Die Reibkraft zwischen den Kupplungselementen und damit das maximal zwischen den Kupplungselementen übertragene Drehmoment nehmen ab. Werden die, insbesondere auf die Abtriebswelle, axial wirkenden Kräfte aber von dem jeweiligen Lagerbock aufgefangen, so verhindert dies, dass die Kupplungselemente außerhalb eines gewissen durch die Lager vorgegebenen Spiels aufeinander gedrückt oder auseinandergezogen werden.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine teilweise weggebrochene isometrische Ansicht eines ersten Schienenelements einer Teleskopschiene aus einem System mit einer Teleskopschiene, einem Antriebsadapter und einem Antriebselement.
- Figur 2: ist eine isometrische Darstellung einer ersten Ausführungsform eines Antriebsadapters von schräg oben.
- Figur 3: ist eine Draufsicht auf den Antriebsadapter aus Figur 2 von oben.
- Figur 4: ist eine weggebrochene vergrößerte Darstellung des mit V bezeichneten Ausschnitts aus Figur 3.
- Figur 5: ist eine weggebrochene vergrößerte isometrische Darstellung eines Bereichs des Antriebsträgers des Antriebsadapters aus den Figuren 1 bis 4.
- Figur 6: ist eine weggebrochene isometrische Darstellung eines Systems mit dem ersten Schienenelement einer Teleskopschiene aus Figur 1, dem Antriebsadapter gemäß den Figuren 2 bis 5 und einem Antriebselement mit einem Elektromotor.
- Figur 7: ist eine isometrische Darstellung von schräg oben einer zweiten Ausführungsform des Antriebsadapters.
- Figur 8: ist eine isometrische Explosionszeichnung des Antriebsadapters aus Figur 7.
- Figur 9: ist eine isometrische Darstellung des Antriebsadapters aus den Figuren 7 und 8 mit einem daran aufgenommenen Elektromotor.
- Figur 10: ist eine isometrische Darstellung von schräg oben des Antriebsadapters aus den Figuren 7 bis 9 in einem zweiten, gegenüber der Darstellung aus Figur 7 verkürzten Länge des Antriebsträgers.
- Figur 11: ist eine isometrische Darstellung von schräg oben einer dritten Ausführungsform des Antriebsadapters.
- Figur 12: ist eine isometrische Darstellung von schräg oben einer weiteren Ausführungsform des Antriebsadapters.

Das im Folgenden anhand der Figuren beschriebene System 1 umfasst ein lineares Führungssystem in Form einer Teleskopschiene 2, einen Antriebsadapter 3 und ein Antriebselement, welches in den dargestellten Ausführungsformen entweder ein Elektromotor 4 oder eine Antriebswelle mit einem Wälzlager ist.

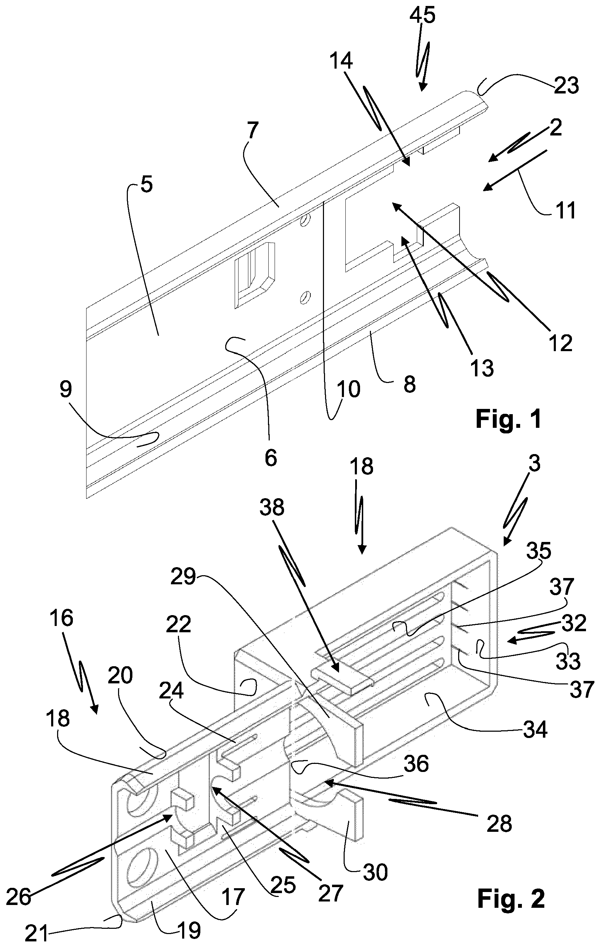

Figur 1 zeigt ein erstes Schienenelement 5 einer Teleskopschiene, welches für eine Motorisierung angepasst ist. Das erste Schienenelement 5 umfasst einen Schienenrücken 6, der im Wesentlichen eben ist. Von diesem Schienenrücken 6 aus erstrecken sich ein oberer Schenkel 7 und ein unterer Schenkel 8, welche die Wälzkörperlaufflächen 9, 10 der Teleskopschiene 2 tragen. Die Wälzkörperlaufflächen 9, 10 werden von in einer Querschnittsansicht senkrecht zu der Auszugsrichtung 11 konkaven Fläche gebildet, auf denen Kugeln als Wälzkörper ablaufen, wenn ein zweites Schienenelement an dem ersten Schienenelement 5 montiert ist.

Das erste Ende 45 des ersten Schienenelements 5 ist dafür vorgesehen, einen Antriebsadapter 3 im Sinne der vorliegenden Anmeldung aufzunehmen. Zu diesem Zweck weist das erste Ende 45 des Schienenelements 5 eine Durchbrechung 12 auf, durch die sich in einer Ausführungsform die Kupplungsscheiben einer Magnetkupplung zwischen einer Antriebswelle und einer Abtriebswelle erstrecken kann. Zudem sind in dem Schienenrücken 6 zwei Rastvertiefungen 13, 14 realisiert, in welche im montierten Zustand zwei Rastnasen 15 des Antriebsadapters 3 eingreifen.

An das so angepasste erste Schienenelement 5 lässt sich ein Antriebsadapter in Ausführungsformen davon, so wie sie nachfolgend beschrieben werden werkzeuglos anflanschen. Somit wird ein an dem Antriebsadapter aufgenommenes Antriebselement werkzeuglos an dem Schienenelement 5 montiert.

Jede in den Figuren gezeigte Ausführungsform eines Antriebsadapters 3 weist einen Halteabschnitt 16 und einen Antriebsträger 18 zur Aufnahme des Antriebselements 4 auf.

Entscheidend für das werkzeuglose Befestigen des Antriebsadapters 3 an dem ersten Schienenelement 5 ist der Halteabschnitt 16. Der Halteabschnitt 16 umfasst einen Halterücken 17, welcher im Wesentlichen eben ausgestaltet ist und sich im montierten Zustand des Antriebsadapter im Wesentlichen parallel zum Schienenrücken 6 des ersten Schienenelements 5 erstreckt. Von diesem Halterücken 17 aus gehen zwei Schenkel 18, 19 ab, welche die Stützflächen 20, 21 tragen. Der Halteabschnitt 16 mit dem Halterücken 17 sowie den Schenkeln 18, 19 mit dem Stützflächen 20, 21 ist im wesentlichen Komplementär zu dem ersten Schienenelement 5 mit Schienenrücken 6 und den Schenkeln 7, 8 ausgestaltet. Daher lässt sich der Halteabschnitt 16 zwischen die Wälzkörperlaufflächen 9, 10 des ersten Schienenelements 5 einschieben, sodass die Stützflächen 20, 21 des Halteabschnitts 16 mit den Wälzkörperlaufflächen 9, 10 in Kontakt sind.

Der auf diese Weise bereitgestellte Formschluss sichert den Antriebsadapter 3 gegen eine Bewegung in der zu der Auszugsrichtung 11 senkrechten Hochrichtung des ersten Schienenelements 5. Verglichen mit dem Abstand zwischen den Wälzkörperlaufflächen 9, 10 des ersten Schienenelements 5 weist der Abstand der voneinander wegzeigenden Stützflächen 20, 21 des Halteabschnitts 16 ein Übermaß von etwa einem 1 mm auf. Auf diese Weise wird ein Kraftschluss zwischen dem Halteabschnitt 16 und dem ersten Schienenelement 5 bereitgestellt, dessen Reibkräfte ein Verschieben des Antriebsadapters 3 in und entgegen der Auszugsrichtung gegenüber dem ersten Schienenelement 5 wesentlich einschränken.

Um den Antriebsadapter 3 jedoch vollständig auch in und entgegen der Auszugsrichtung 11 an dem ersten Schienenelement 5 festzulegen bildet eine Außenfläche 22 des Antriebsträgers 18, die sich im Wesentlichen senkrecht zu der Auszugsrichtung 11 erstreckt, einen Anschlag. Dieser Anschlag kommt bei dem Montieren des Antriebsadapters 3 an dem ersten Schienenelement 5 mit einer Stirnfläche 23 am ersten Ende 45 des ersten Schienenelements 5 in Kontakt. Der Kontakt zwischen der Stirnfläche 23 des ersten Schienenelements 5 und der Außenfläche 22 des Antriebsträgers 18 verhindert ein weiteres Einschieben des Antriebsadapters 3 in das Schienenelement 5 in der Auszugsrichtung 11.

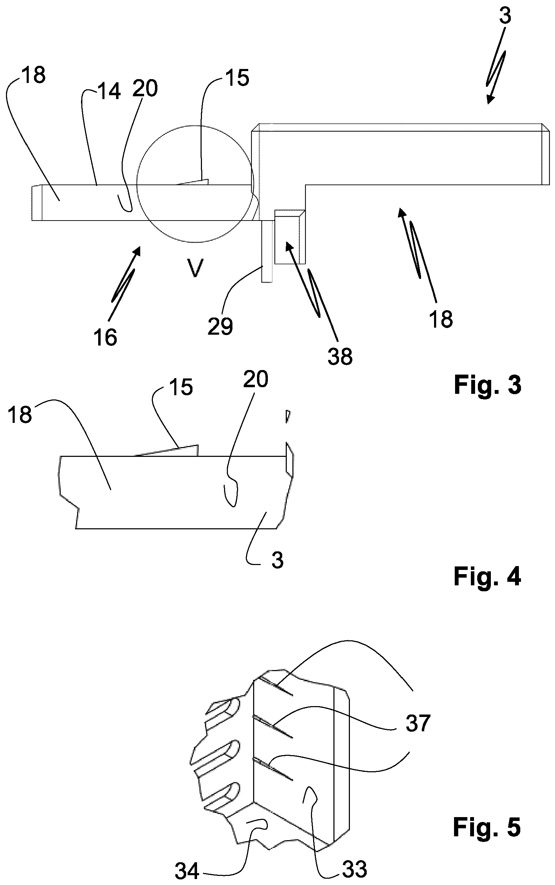

Um den Antriebsadapter auch gegen eine Bewegung entgegen der Auszugsrichtung an dem ersten Schienenelement 5 festzulegen weist der Halteabschnitt 16 am Halterücken 17 zwei Rastnasen 15 auf. Diese Rastnasen 15 sind an die Rückseite des Halterückens angespritzt, so wie dies in der Draufsicht von oben auf den Antriebsadapter 3 aus Figur 3 sowie in der vergrößerten Ausschnittsdarstellung aus Figur 4 sichtbar ist.

Damit die Rastnasen 15 gegenüber dem übrigen Halterücken 17 beim Einschieben des Halteabschnitts 16 zwischen die Schenkel 7, 8 des Schienenelements 5 einfedern, sind die beiden Rastnasen 15 auf Stegen 24, 25 des Halterückens 17 angeordnet, wobei zwischen den Stegen und dem verbleibenden Halterücken 17 jeweils längliche Durchbrechungen vorgesehen sind.

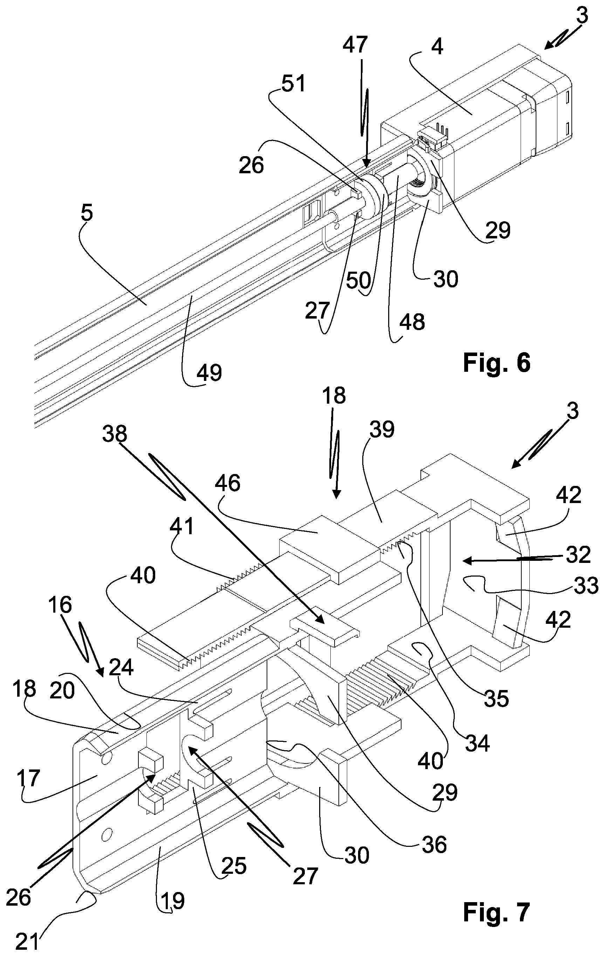

Fig. 6 zeigt das erste Schienenelement 5 mit dem daran montierten Antriebsadapter 3 sowie den an dem Antriebsadapter 3 und dem ersten Schienenelement 5 aufgenommenen Elementen des eigentlichen Antriebs. An dem Antriebsträger 18 des Antriebsadapters 3 ist ein Elektromotor 4 aufgenommen. Dieser Elektromotor 4 treibt über eine Antriebswelle 48 und eine Magnetkupplung 47 einen Spindeltrieb als Abtriebswelle 49.

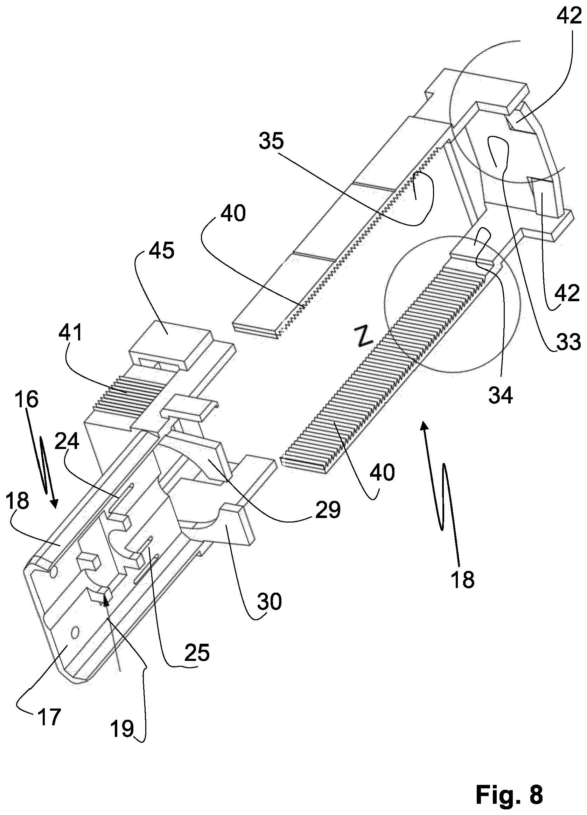

In der dargestellten Ausführungsform des Antriebsadapters 3 gemäß den Figuren 2 bis 6, aber auch bei der Ausführungsform gemäß den Figuren 7-10, dient der Antriebsadapter 3 auch zur Führung und Montage der weiteren über den Elektromotor 4 hinausgehenden Elemente des Antriebs.

Zu diesem Zweck trägt der Halterücken 17 des Halteabschnitts 16 zwei Lagerböcke 26, 27. In dieser Ausführungsform bildet jeder der Lagerböcke 26, 27 einen Teil, nämlich die halbschalenförmige Lagerbuchse eines Gleitlagers zum Führen der über eine Magnetkupplung 47 gekoppelten Antriebs- 48 und Abtriebswellen 49 eines Antriebsstrangs.

In der dargestellten Ausführungsform sind die Antriebswelle 48 und die Abtriebswelle 49 über die Magnetkupplung 47 bis zu einem maximalen Drehmoment miteinander gekoppelt. Die Magnetkupplung 47 umfasst ein erstes Kupplungselement 50 und ein zweites Kupplungselement 51. Das erste Kupplungselement 50 ist das motorwellenseitige Kupplungselement. Dieses erste Kupplungselement 50 ist drehmomentfest mit der Motorwelle 48 verbunden. D. h., ein Drehmoment, welches die Motorwelle 48 aufweist, wird ohne Schlupf und Drehmomentverlust von der Motorwelle 48 in das erste Kupplungselement 50 eingeleitet. Die Motorwelle 48 und das erste Kupplungselement 50 drehen immer mit gleicher Winkelgeschwindigkeit. Das zweite Kupplungselement 51 wiederum ist drehmomentfest mit der Gewindespindel 49 verbunden, sodass ein auf das zweite Kupplungselement 51 übertragenes Drehmoment vollständig und ohne Schlupf auf die Gewindespindel 49 übertragen wird. Die Gewindespindel 49 und das zweite Kupplungselement 51 drehen immer mit gleicher Winkelgeschwindigkeit.

Die beiden Kupplungselemente 50, 51 sind in axialer Richtung reibschlüssig miteinander verbunden. Die Kraft, welche in axialer Richtung wirkt und den Reibschluss bewirkt, ist eine magnetische Kraft von einem Permanentmagneten. In der dargestellten Ausführungsform weist das erste, motorseitige Kupplungselement 50 den Permanentmagneten auf. Dieser Permanentmagnet zieht das zweite, spindeltriebseitige Kupplungselement 51 an. Daher wird das erste Kupplungselement 50 auch als Topfmagnet bezeichnet und das zweite Kupplungselement 51 als Magnetanlaufscheibe.

Die Magnetkupplung 47 ermöglicht es, eine Drehmomentbegrenzung vorzusehen und zudem die Montage der Einheit aus dem Antriebsadapter 3 und einem an diesem aufgenommenen Elektromotor 4 zu erleichtern. In einem Beispiel kann der Spindeltrieb an dem ersten Schienenelement 5 vormontiert sein, während dann der Antriebsadapter 3 an dem ersten Schienenelement 5 montiert wird.

An den Halteabschnitt 16 schließt sich ein Antriebsträger 18 an. In den Ausführungsformen der Figuren 2 bis 6, 7 bis 10 sowie 11 dient der Antriebsträger 18 der Aufnahme eines Elektromotors 4 als Antriebselement im Sinne der vorliegenden Anmeldung. Auch der Elektromotor 4 wird auf dem Antriebsträger 18 werkzeuglos montiert.

In der Ausführungsform der Figuren 2 bis 6 wird der Elektromotor zum einen mit Hilfe zweier einen kreisförmigen Klemmbereich 28 definierenden Klemmbacken 29, 30 an einem im Wesentlichen kreisförmigen Montageabschnitt 31 geklemmt. Ferner weist der Antriebsträger einen Montagerahmen 32 mit vier Wandflächen 33, 34, 35, 36 auf. Die Stirnflächen 37, 38 des Elektromotors 44werden von den zwei in Auszugsrichtung gegenüberliegenden Wandflächen 33, 36 des Montagerahmens 32 geklemmt. Dabei ist der Abstand zwischen den beiden Stirnflächen 37, 38 des Elektromotors 4 geringfügig kleiner als der lichte Abstand zwischen den beiden Klemmflächen 33, 36 des Montagerahmens 32, wobei jedoch auf der Klemmfläche 33 Quetschraupen 37 vorgesehen. Diese ragen in den von den Wandflächen 33, 34, 35, 36 eingeschlossenen Innenraum des Montagerahmens 32 hinein, sodass die Quetschraupen von der Stirnfläche 38 des Elektromotors 4 beim Einbringen des Elektromotors 4 in den Montagerahmen 32 zusammengedrückt werden und so die beiden Klemmflächen 33, 36 den Elektromotor 4 auch in einer Richtung parallel zur Auszugsrichtung 11 einklemmen. Die Quetschraupen 37 sind auch in der vergrößerten Darstellung der Figur 5 zu sehen.

Bei der Ausführungsform der Figuren 2 bis 6 ist auf dem Antriebsträger 18 zudem eine Montageeinrichtung 38 zum Einklemmen eines Mikroschalters als Endlagenerkennung für das gegenüber dem ersten Schienenelement 5 verschiebbare zweite Schienenelement vorgesehen.

Die Ausführungsform des Antriebsadapters 3 gemäß den Figuren 7 bis 9 unterscheidet sich von der ersten Ausführungsform des Antriebsadapters 3 dadurch, dass der Montagerahmen 32 in seiner Länge in Richtung der Auszugsrichtung 11 zweiteilig und einstellbar ausgestaltet ist. Um die Längenverstellbarkeit zu gewährleisten sind die Seitenwandflächen 34, 35 des Montagerahmens 32 jeweils mit Rastzähnen 40 versehen.

Die Seitenwände des Montagerahmens 32 sind in dafür vorgesehene Aufnahmen 46, die mit dem verbleibenden Montagerahmen 32 und darüber hinaus mit dem Antriebsträger 16 verbunden sind, eingeschoben. Dabei kämmen die Rastzähne 40 mit dazu komplementären Rastzähnen 41 an dem mit dem Halteabschnitt 16 fest verbundenen Abschnitt des Montagerahmens 32. Die Rastzähne 40, 41 sind derart ausgestaltet, dass sie eine Einschubbewegung des einen Elements gegenüber dem anderen Element in der Auszugsrichtung ermöglichen, nicht aber ein Herausziehen des einen Elements aus dem anderen entgegen der Auszugsrichtung 11. Auf diese Weise kann ein Elektromotor 4, der in dem Montagerahmen 32 aufgenommen ist, nach dem Einlegen durch irreversibles Einschieben des einen Elements in das andere festgeklemmt werden. Zudem weist die Klemmfläche 33 zwei federnde Abschnitte 42 auf, welche die Klemmfläche 33 abschnittsweise in Richtung des Elektromotors 4 vorspannen und diesen klemmen.

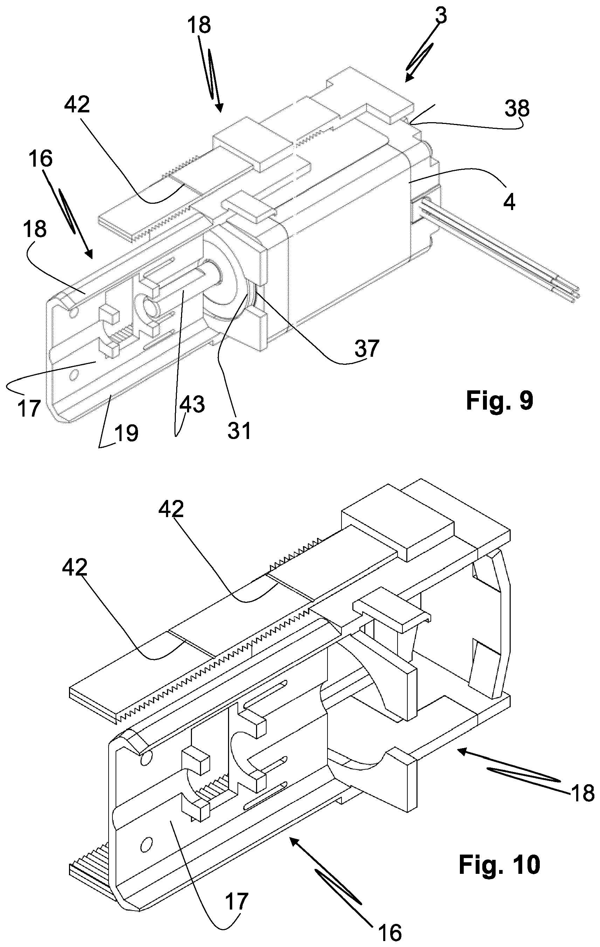

Über die vereinfachte Montage des Elektromotors 4 hinaus ermöglicht es die Ausführungsform des Antriebsadapters 3 der Figuren 7 bis 10, den Montagerahmen in seiner Längsrichtung parallel zur Auszugsrichtung 11 auf verschiedene Längen von Elektromotoren 4 anzupassen. Dies ist deutlich anhand eines Vergleichs der Darstellungen der Figuren 7 und 10 erkennbar. Während in Figur 7 der Antriebsträger bzw. dessen Montagerahmen 32 zur Aufnahme eines langen Elektromotors 4 angepasst ist, ist die Einstellung in Figur 10 so gewählt, dass ein kürzerer Elektromotor einklemmbar ist.

Wie aus Figur 10 deutlich ersichtlich, ist der Wandabschnitt des Montagerahmens, welcher die Rastzähne 40 trägt mit zwei Sollbruchstellen 42 versehen, welche es ermöglichen, bei sehr kurzen Elektromotoren den Überstand des Montagerahmens in der Auszugsrichtung 11 zu reduzieren. Dazu wird der Rahmen, soweit er übersteht, abgebrochen.

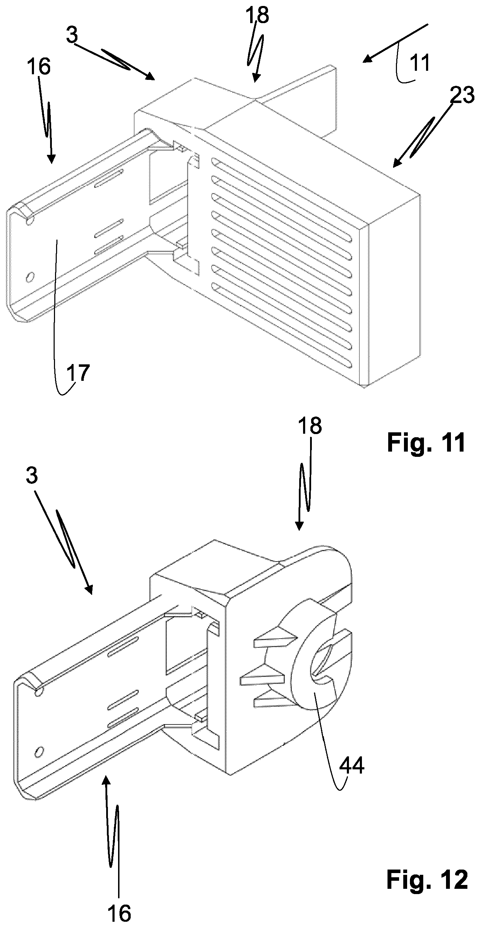

In der Ausführungsform der Figur 11 ist der Antriebsträger 18 derart angeordnet, dass sich die Motorwelle 43 des Elektromotors 4 nicht parallel zur Auszugsrichtung 11 sondern senkrecht dazu erstreckt. Auf diese Weise kann der Antriebsadapter 3 dieser Ausführungsform zur Realisierung eines Riementriebs, bei welchem sich der Antriebsriemen in der Auszugsrichtung erstreckt und von einem Stirnrad auf der Motorwelle 43 des Elektromotors 4 angetrieben wird, realisiert werden. In dieser Ausführungsform erstrecken sich die beiden Klemmflächen im Wesentlichen parallel zu dem Halterücken 17 des Halteabschnitts 16.

Anders als in den Ausführungsformen gemäß den Figuren 2 bis 11 ist in der Ausführungsform der Figur 12 der Antriebsadapter 3 nicht zur Aufnahme eines Elektromotors 4 in den Antriebsträger 18 vorgesehen. Stattdessen umfasst der Antriebsträger 18 eine Lageraufnahme 44 für ein Wälzlager einer Antriebsstange oder -welle zum Synchronisieren des motorischen Antriebs zweier Teleskopschienen. Dieses Wälzlager bildet im Sinne der vorliegenden Anmeldung ebenfalls ein Teil eines Antriebselements.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmalen oder Merkmalsgruppen kombinierbar sind, soweit es nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellungsbeschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Titel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Teleskopschiene
- 3: Antriebsadapter
- 4: Elektromotor
- 5: erstes Schienenelement
- 6: Schienenrücken
- 7: oberer Schenkel
- 8: unterer Schenkel
- 9, 10: Wälzkörperlaufflächen
- 11: Auszugsrichtung
- 12: Durchbrechung
- 13, 14: Rastvertiefungen
- 15: Rastnase
- 16: Halteabschnitt
- 17: Halterücken
- 18: Antriebsträger
- 18, 19: Schenkel
- 20, 21: Stützfläche
- 22: Außenfläche
- 23: Stirnfläche
- 24, 25: Stege
- 26, 27: Lagerbock
- 28: Klemmbereich
- 29, 30: Klemmbacken
- 31: Montageabschnitt
- 32: Montagerahmen
- 33, 34, 35, 36: Wandfläche
- 33, 36: Klemmfläche
- 37, 38: Stirnfläche
- 37: Quetschraupe
- 38: Montageeinrichtung
- 40, 41: Rastzähne
- 42: Sollbruchstellen
- 42: federnder Abschnitt
- 43: Motorwelle
- 44: Lageraufnahme
- 45: Ende des ersten Schienenelements
- 46: Aufnahme
- 47: Magnetkupplung
- 48: Antriebswelle
- 49: Abtriebswelle
- 50: erstes Kupplungselement
- 51: zweites Kupplungselement

## Patentansprüche

1. Antriebsadapter (3) zur werkzeuglosen Montage eines Antriebselements (4) an einem Schienenelement (5) eines Führungssystems (2) mit
einem Antriebsträger (18) und
einem Halteabschnitt (16),
wobei der Antriebsträger (18)
eine Montageeinrichtung (29, 30, 32) für ein Antriebselement (4) aufweist,
wobei der Halteabschnitt (16)
zwei Stützflächen (20, 21) und
einen die Stützflächen (20, 21) zumindest abschnittsweise verbindenden und einen Abstand zwischen den Stützflächen (20, 21) definierenden Halterücken (17) aufweist,
**dadurch gekennzeichnet, dass**
die zwei Stützflächen (20, 21)
jede konvex gekrümmt sind,
voneinander wegzeigen und
derart ausgestaltet sind, dass sie zwischen zwei zueinander hinzeigenden Wälzkörperlaufflächen (9, 10) des Schienenelements (5) einklemmbar sind.

2. Antriebsadapter (3) nach dem vorhergehenden Anspruch, wobei der Halteabschnitt (16) zumindest eine Rastnase (15) oder eine Rastvertiefung zum Verrasten mit einem dazu komplementären Element (13, 14) an dem Schienenelement (5) aufweist.

3. Antriebsadapter (3) nach einem der vorhergehenden Ansprüche, wobei der Antriebsadapter (3) einstückig aus Kunststoff besteht.

4. Antriebsadapter (3) nach einem der vorhergehenden Ansprüche, wobei der Halterücken (17) zumindest einen Lagerbock (26, 27) zum Aufnehmen eines Lagers einer Welle trägt.

5. Antriebsadapter (3) nach dem vorhergehenden Anspruch, wobei der Halterücken (17) zwei Lagerböcke (26, 27) zum Aufnehmen jeweils eines Lagers einer Antriebswelle und einer Abtriebswelle trägt, wobei zwischen den beiden Lagerböcken (26, 27) eine Durchbrechung in dem Halterücken (17) zum Aufnehmen einer Kupplung (47) zwischen einer Antriebswelle (48) und einer Abtriebswelle (49) vorgesehen ist.

6. Antriebsadapter (3) nach einem der vorhergehenden Ansprüche, wobei die Montageeinrichtung (29, 30, 32) des Antriebsträgers (18) zwei Klemmbacken (29, 30) mit zueinander hinzeigenden konkaven Klemmflächen zum kraftschlüssigen Klemmen einer konvexen Außenfläche des Antriebselements mit einem Elektromotor (4) aufweist.

7. Antriebsadapter (3) nach einem der vorhergehenden Ansprüche, wobei die Montageeinrichtung (29, 30, 32) des Antriebsträgers (18) einen Montagerahmen (32) mit zwei gegenüberliegenden Klemmflächen (33, 36) zum kraftschlüssigen Aufnehmen des Abtriebselements (4) zwischen den beiden Klemmflächen (33, 36) umfasst.

8. Antriebsadapter (3) nach dem vorhergehenden Anspruch, wobei ein Abstand zwischen den zwei gegenüberliegenden Klemmflächen (33, 36) einstellbar veränderbar ist, so dass Antriebselemente (4) mit voneinander verschiedener Länge in dem Montagerahmen (32) aufnehmbar sind.

9. Antriebsadapter (3) nach Anspruch 7 oder 8, wobei zumindest eine der zwei Klemmflächen (33, 36) zumindest abschnittsweise in Richtung der anderen Klemmfläche (33, 36) federnd vorgespannt ist.

10. Antriebsadapter (3) nach einem der Ansprüche 7 bis 9, wobei zumindest eine der zwei Klemmflächen (33, 36) zumindest eine Quetschraupe (37) zum kraftschlüssigen Klemmen des Antriebselements (4) aufweist.

11. Antriebsadapter (3) nach einem der Ansprüche 7 bis 10, wobei sich die zwei Klemmflächen (33, 36) im Wesentlichen senkrecht oder im Wesentlichen parallel zu dem Halterücken (17) erstrecken.

12. Antriebsadapter (3) nach einem der Ansprüche 1 bis 6, wobei die Montageeinrichtung (29, 30, 32) des Antriebsträgers (18) eine Wälzlageraufnahme (44) zum Aufnehmen eines Wälzlagers einer Welle umfasst, wobei die Wälzlageraufnahme (44) vorzugsweise derart angeordnet ist, dass sie ein Wälzlager für eine im Wesentlichen zu dem Halterücken (18) senkrechte Welle aufnimmt.

13. System (1) mit
einem Führungssystem (2) mit mindestens einem ersten und einem zweiten Schienenelement (5),
einem Antriebselement (4)
und einem Antriebsadapter (3) nach einem der vorhergehenden Ansprüche,
wobei das erstes Schienenelement (5)
zwei jeweils eine konkav gekrümmte Wälzkörperlauffläche (9, 10) tragende Schenkel (7, 8) und
einen die Schenkel (7, 8) verbindenden Schienenrücken (6) aufweist,
wobei der Halteabschnitt (16) in das erste Schienenelement (5) eingeklemmt ist, so dass die konvex gekrümmten, voneinander wegzeigenden Stützflächen (20, 21) jeweils mit einer Wälzkörperlauffläche (9, 10) in Eingriff sind.

14. System (1) nach Anspruch 13, wobei ein Abstand zwischen den voneinander wegzeigenden Stützflächen (7, 8) des Halteabschnitts (16) vor dem Einbringen in das erste Schienenelement (5) größer ist als ein Abstand zwischen den Wälzkörperlaufflächen (9, 10) des Schienenelements (5).

15. System (1) nach Anspruch 13 oder 14, wobei der Halterücken (17) des Antriebsadapters (3) eine Rastnase (15) aufweist, die in eine Rastvertiefung (13, 14) in dem Schienenrücken (6) des ersten Schienenelements (5) eingerastet ist oder der Schienenrücken (5) des ersten Schienenelements (5) eine Rastnase aufweist, die in eine Rastvertiefung in dem Halterücken (17) des Antriebsadapters (3) eingerastet ist.

## Claims

1. A drive adapter (3) for tool-free mounting of a drive element (4) on a rail element (5) of a guide system (2) comprising
a drive carrier (18), and
a holding section (16),
wherein the drive carrier (18) comprises
a mounting means (29, 30, 32) for a drive element (4),
wherein the holding section (16) comprises
two support surfaces (20, 21), and
a holding ridge (17) which connects the support surfaces (20, 21) at least in sections and defines a distance between the support surfaces (20, 21),
**characterized in that**
the two support surfaces (20, 21) are
each convexly curved,
face away from one another and
configured such that they can be clamped between two rolling element running surfaces (9, 10) of the rail element (5) which face one another.

2. The drive adapter (3) according to the preceding claim, wherein the holding section (16) comprises at least one latching lug (15) or a latching recess for latching with a complementary element (13, 14) on the rail element (5).

3. The drive adapter (3) according to any one of the preceding claims, wherein the drive adapter (3) is made in one piece of plastic.

4. The drive adapter (3) according to any one of the preceding claims, wherein the holding ridge (17) carries at least one bearing block (26, 27) for receiving a bearing of a shaft.

5. The drive adapter (3) according to the preceding claim, wherein the holding ridge (17) carries two bearing blocks (26, 27) for receiving a respective bearing of a drive shaft and an output shaft, wherein an opening for receiving a coupling (47) between a drive shaft (48) and an output shaft (49) is provided in the holding ridge (17) between the two bearing blocks (26, 27).

6. The drive adapter (3) according to any one of the preceding claims, wherein the mounting means (29, 30, 32) of the drive carrier (18) comprises two clamping jaws (29, 30) with concave clamping surfaces which face one another for clamping a convex outer surface of the drive element having an electric motor (4) in a force-locking manner.

7. The drive adapter (3) according to any one of the preceding claims, wherein the mounting means (29, 30, 32) of the drive carrier (18) comprises a mounting frame (32) having two opposite clamping surfaces (33, 36) for receiving the output element (4) between the two clamping surfaces (33, 36) in a force-locking manner.

8. The drive adapter (3) according to the preceding claim, wherein a distance between the two opposite clamping surfaces (33, 36) is adjustably variable so that drive elements (4) of different lengths can be received in the mounting frame (32).

9. The drive adapter (3) according to Claim 7 or 8, wherein at least one of the two clamping surfaces (33, 36) is resiliently pretensioned at least in sections in the direction of the other clamping surface (33, 36).

10. The drive adapter (3) according to any one of Claims 7 to 9, wherein at least one of the two clamping surfaces (33, 36) comprises at least one crimping bead (37) for clamping the drive element (4) in a force-locking manner.

11. The drive adapter (3) according to any one of Claims 7 to 10, wherein the two clamping surfaces (33, 36) extend substantially perpendicular or substantially parallel to the holding ridge (17).

12. The drive adapter (3) according to any one of Claims 1 to 6, wherein the mounting means (29, 30, 32) of the drive carrier (18) comprises a rolling bearing seat (44) for receiving a rolling bearing of a shaft, wherein the rolling bearing seat (44) is preferably disposed to receive a rolling bearing for a shaft which is substantially perpendicular to the holding ridge (18).

13. A system (1) comprising
a guide system (2) comprising at least a first and a second rail element (5),
a drive element (4)
and a drive adapter (3) according to any one of the preceding claims,
wherein the first rail element (5) comprises
two legs (7, 8) which each carry a concavely curved rolling element running surface (9, 10), and
a rail back (6) which connects said legs (7, 8),
wherein the holding section (16) is clamped into the first rail element (5) such that both of the convexly curved support surfaces (20, 21) which face away from one another are each in engagement with a rolling element running surface (9, 10).

14. The system (1) according to Claim 13, wherein either a distance between the support surfaces (7, 8) of the holding section (16) which face away from one another prior to being placed into the first rail element (5) is larger than a distance between the rolling element running surfaces (9, 10) of the rail element (5).

15. The system (1) according to Claim 13 or 14, wherein the holding ridge (17) of the drive adapter (3) comprises a latching lug (15) that is snapped into a latching recess (13, 14) in the rail back (6) of the first rail element (5) or the rail back (5) of the first rail element (5) comprises a latching lug that is snapped into the holding ridge (17) of the drive adapter (3).

## Revendications

1. Adaptateur d'entraînement (3) destiné au montage sans outil d'un élément d'entraînement (4) sur un élément de rail (5) d'un système de guidage (2) avec
un support d'entraînement (18) et
une partie de fixation (16),
le support d'entraînement (18)
comprenant un dispositif de montage (29, 30, 32) pour un élément d'entraînement (4),
la partie de fixation (16) comprenant
deux surfaces d'appui (20, 21) et
un dos de fixation (17) reliant les surfaces d'appui (20, 21) au moins par zones et définissant une distance entre les surfaces d'appui (20, 21),
**caractérisé en ce que**
les deux surfaces d'appui (20, 21)
sont chacune courbée convexe,
sont orientées dans des sens opposés et
sont configurées de façon qu'elles puissent être serrées entre deux surfaces de roulement de corps roulants (9, 10) orientées l'une vers l'autre de l'élément de rail (5).

2. Adaptateur d'entraînement (3) selon la revendication précédente, la partie de fixation (16) comprenant au moins un ergot d'encliquetage (15) ou un creux d'encliquetage pour encliqueter dans un élément complémentaire (13,14) sur l'élément de rail (5).

3. Adaptateur d'entraînement (3) selon l'une des revendications précédentes, l'adaptateur d'entraînement (3) étant formé d'une seule pièce en matière synthétique.

4. Adaptateur d'entraînement (3) selon l'une des revendications précédentes, le dos de fixation (17) portant au moins un bloc de support (26, 27) destiné à recevoir un palier d'un arbre.

5. Adaptateur d'entraînement (3) selon la revendication précédente, le dos de fixation (17) portant deux blocs de support (26, 27) destinés à recevoir respectivement un palier d'un arbre d'entraînement et d'un arbre entraîné, entre les deux blocs de support (26,27), une ouverture étant prévue dans le dos de fixation (17) pour recevoir un accouplement (47) entre un arbre d'entraînement (48) et un arbre entraîné (49).

6. Adaptateur d'entraînement (3) selon l'une des revendications précédentes, le dispositif de montage (29, 30, 32) du support d'entraînement (18) comprenant deux mâchoires de serrage (29, 30) avec deux surfaces de serrage concaves orientées l'une vers l'autre pour serrer par la force une surface extérieure convexe de l'élément d'entraînement avec un moteur électrique (4).

7. Adaptateur d'entraînement (3) selon l'une des revendications précédentes, le dispositif de montage (29, 30, 32) du support d'entraînement (18) comprenant un cadre de montage (32) avec deux surfaces de serrage (33, 36) en regard pour recevoir, avec liaison à force, l'élément entraîné (4) entre les deux surfaces de serrage (33, 36).

8. Adaptateur d'entraînement (3) selon la revendication précédente, une distance entre les deux surfaces de serrage (33, 36) en regard pouvant être ajustée de façon variable, de façon que des éléments d'entraînement (4) de longueurs différentes puissent être reçus dans le cadre de montage (32).

9. Adaptateur d'entraînement (3) selon la revendication 7 ou 8, au moins une des deux surfaces de serrage (33, 36) étant précontrainte élastiquement, au moins par sections, en direction de l'autre surface de serrage (33, 36).

10. Adaptateur d'entraînement (3) selon l'une des revendications 7 à 9, au moins une des deux surfaces de serrage (33, 36) comprenant au moins un bourrelet de serrage (37) pour serrer, avec liaison à force, l'élément d'entraînement (4).

11. Adaptateur d'entraînement (3) selon l'une des revendications 7 à 10, les deux surfaces de serrage (33, 36) s'étendant sensiblement verticalement ou sensiblement parallèlement au dos de fixation (17).

12. Adaptateur d'entraînement (3) selon l'une des revendications 1 à 6, le dispositif de montage (29, 30, 32) du support d'entraînement (18) comprenant un logement de palier à roulement (44) pour recevoir un palier à roulement d'un arbre, le logement de palier à roulement (44) étant agencé de préférence de façon qu'il reçoive un arbre sensiblement perpendiculaire au dos de fixation (18).

13. Système (1) avec
un système de guidage (2) avec au moins un premier et un deuxième éléments de rail (5),
un élément d'entraînement (4)
et un adaptateur d'entraînement (3) selon l'une des revendications précédentes,
le premier élément de rail (5) comprenant
deux branches (7, 8) comportant chacune une surface de roulement de corps roulants (9,10) courbées concave et
un dos de rail (6) reliant les branches (7, 8),
la partie de fixation (16) étant serrée dans le premier élément de rail (5), de façon que les surfaces d'appui (20, 21) courbées convexe et orientées dans des sens opposés soient engagées chacune avec une surface de roulement de corps roulants (9, 10).

14. Système (1) selon la revendication 13, une distance entre les deux surfaces d'appui (7, 8) orientées dans des sens opposés de la partie de fixation (16) étant plus grande, avant l'insertion dans le premier élément de rail (5), qu'une distance entre les surfaces de corps roulants (9, 10) de l'élément de rail (5).

15. Système (1) selon la revendication 13 ou 14, le dos de fixation (17) de l'adaptateur d'entraînement (3) comprenant un ergot d'encliquetage (15) qui est encliqueté dans un creux d'encliquetage (13, 14) dans le dos de rail (6) du premier élément de rail (5), ou le dos de rail (5) du premier élément de rail (5) comprenant un ergot d'encliquetage qui est encliqueté dans un creux d'encliquetage dans le dos de fixation (17) de l'adaptateur d'entraînement (3).
